(19) **Europäisches Patentamt**

**European Patent Office**

**Office européen des brevets**

(11) **EP 0 909 412 B1**

(12) **EUROPÄISCHE PATENTSCHRIFT**

(45) Veröffentlichungstag und Bekanntmachung des Hinweises auf die Patenterteilung:
**05.04.2000 Patentblatt 2000/14**

(51) Int Cl.7: **G05D 1/03**

(21) Anmeldenummer: **97930325.2**

(86) Internationale Anmeldenummer:
**PCT/DE97/01218**

(22) Anmeldetag: **16.06.1997**

(87) Internationale Veröffentlichungsnummer:
**WO 98/00767 (08.01.1998 Gazette 1998/01)**

(54) **VERFAHREN ZUR ERSTELLUNG EINER ZELLULAR STRUKTURIERTEN UMGEBUNGSKARTE VON EINER SELBSTBEWEGLICHEN MOBILEN EINHEIT, WELCHE SICH MIT HILFE MIT AUF WELLENREFLEXION BASIERENDEN SENSOREN IN DER UMGEBUNG ORIENTIERT**

PROCESS FOR PREPARING AN AREA PLAN HAVING A CELLULAR STRUCTURE AND COMPRISING A UNIT MOVING AUTOMATICALLY AND POSITIONED IN SAID AREA USING SENSORS BASED ON WAVE REFLECTION

PROCEDE DE REALISATION D'UNE CARTE ENVIRONNEMENTALE A STRUCTURE CELLULAIRE D'UNE UNITE MOBILE AUTONOME QUI S'ORIENTE DANS L'ENVIRONNEMENT A L'AIDE DE DETECTEURS BASES SUR LA REFLEXION D'ONDES

(84) Benannte Vertragsstaaten:
**CH DE FR GB IT LI SE**

(73) Patentinhaber: **SIEMENS AKTIENGESELLSCHAFT**
**80333 München (DE)**

(72) Erfinder:
• **BAUER, Rudolf**
**D-85579 Neubiberg (DE)**
• **WIENKOP, Uwe**
**D-81737 München (DE)**

(30) Priorität: **02.07.1996 DE 19626628**

(43) Veröffentlichungstag der Anmeldung:
**21.04.1999 Patentblatt 1999/16**

(56) Entgegenhaltungen:
**DE-A- 4 408 328      DE-A- 4 408 329
US-A- 5 525 883**

• **JANET J A ET AL: "SONAR WINDOWS AND GEOMETRICALLY REPRESENTED OBJECTS FOR MOBILE ROBOT SELF-REFERENCING" INTELLIGENT ROBOTS FOR FLEXIBILITY, YOKOHAMA, JULY 26 - 30, 1993, Bd. 2, INSTITUTE OF ELECTRICAL AND ELECTRONICS ENGINEERS, Seiten 1324-1331, XP000447587**

• **KO H H ET AL: "A METHOD OF ACOUSTIC LANDMARK EXTRACTION FOR MOBILE ROBOT NAVIGATION" IEEE TRANSACTIONS ON ROBOTICS AND AUTOMATION, Bd. 12, Nr. 3, Seiten 478-485, XP000588560**

• **BORENSTEIN J ET AL: "THE VECTOR FIELD HISTOGRAM-FAST OBSTACLE AVOIDANCE FOR MOBILE ROBOTS" IEEE TRANSACTIONS ON ROBOTICS AND AUTOMATION, Bd. 7, Nr. 3, Seiten 278-288, XP000204797**

• **HAKYOUNG CHUNG ET AL: "PATH PLANNING FOR A MOBILE ROBOT WITH GRID TYPE WORLD MODEL" PROCEEDINGS OF THE IEEE/RSJ INTERNATIONAL CONFERENCE ON INTELLIGENT ROBOTS AND SYSTEMS, RALEIGH, NC., JULY 7 - 10, 1992, Bd. 1, INSTITUTE OF ELECTRICAL AND ELECTRONICS ENGINEERS, Seiten 439-444, XP000339039**

• **WEN C LIN ET AL: "ON DUAL ULTRASOUND SENSOR TECHNIQUE FOR UNMANNED VEHICLES" AUTOMATION IN CONSTRUCTION, Bd. 1, Nr. 2, Seiten 153-165, XP000339113**

• **SCHIELE B ET AL: "A COMPARISON OF POSITION ESTIMATION TECHNIQUES USING OCCUPANCY GRIDS" PROCEEDINGS OF THE INTERNATIONAL CONFERENCE ON ROBOTICS AND AUTOMAT, SAN DIEGO, MAY 8 - 13, 1994, Bd. VOL. 2, Nr. CONF. 11, INSTITUTE OF ELECTRICAL AND ELECTRONICS ENGINEERS, Seiten 1628-1634, XP000478526**

**Beschreibung**

Bei der Orientierung von autonomen mobilen Einheiten, wie dies beispielsweise Fernerkundungssonden, Einheiten die in Gefahrengebieten operieren, selbstbewegliche Industriestaubsauger, Transportfahrzeuge und selbstbewegliche Roboter sein können, tritt das Problem auf, daß sie sich selbst ein Bild von ihrer Umgebung machen müssen. Dazu muß sich ein solches Gerät eine zuverlässige Karte von seiner Arbeitsumgebung aufbauen und sich gleichzeitig anhand dieser Karte zu jedem Zeitpunkt selbst lokalisieren können. Dabei ist zu beachten, daß in Abhängigkeit der Bewegungsgeschwindigkeit eines solchen Gerätes eine möglichst schnelle Auswertung und ein möglichst schneller Aufbau dieser Karte erforderlich sein kann. Eine praktikable Methode für den Aufbau einer solchen Karte und zur Orientierung einer solchen selbstbeweglichen mobilen Einheit in einer unbekannten Umgebung besteht darin, daß sich die Einheit ein zweidimensionales Gitter ihrer Umgebung aufbaut und einzelne Zellen dieses Gitters mit Belegungsgradwerten versieht. Die Gitterzelle vergebenen Belegungsgradwerte repräsentieren das Auftreten von Hindernissen in der Umgebung. Verfahren dieser Art sind aus dem Stand der Technik bekannt und sollen als Grundlage für die vorliegende Erfindung dienen.

In [1] ist ein Basisverfahren für den Aufbau zellular strukturierter Umgebungskarten gegeben, welche mit Belegungsgradwerten für das Repräsentieren von Hindernissen versehen werden. In [2] ist ein Verfahren angegeben, mit welchem die Orientierung einer solchen mobilen Einheit innerhalb einer solchen Gitterkarte verbessert werden kann, indem ein Koordinatenreferenzpunkt unterhalb der durch das Gitter vorgesehenen Diskretisierung definiert wird, indem ein spezifischer Punkt einer autonomen mobilen Einheit innerhalb einer Ausgangszelle als Koordinatenreferenzpunkt definiert wird. In [3] ist ein weiteres Orientierungsverfahren für autonome mobile Einheiten innerhalb eines Gitterrasters der Umgebung angegeben, bei welchem Sensoreigenschaften, wie Blindbereiche und maximale Entfernungen zu Hindernissen zur Auswertung der Karte mit einbezogen werden.

Die der Erfindung zugrundeliegende Aufgabe besteht darin, ein verbessertes Verfahren für den Aufbau einer zellular strukturierten Umgebungskarte durch eine autonome mobile Einheit anzugeben, wobei insbesondere die Vergabe der Belegungsgradwerte und die Löschung der Belegungsgradwerte durch das Verfahren verbessert werden soll.

Diese Aufgabe wird gemäß den Merkmalen des Patentanspruches 1 gelöst.

Weiterbildungen der Erfindung ergeben sich aus den abhängigen Ansprüchen.

Ein besonderer Vorteil des erfindungsgemäßen Verfahrens besteht darin, daß die Meßrichtung des Sensors unter welcher ein Hindernis gemessen wird, bei der Abspeicherung der Belegungsgradwerte je einzelner Zelle der gitterförmigen Umgebungskarte mit berücksichtigt wird. Auf diese Weise kann sichergestellt werden, daß Hindernisse, welche von verschiedenen Sensoren im zeitlichen Ablauf erfaßt werden, lediglich dann aus der Karte gelöscht werden können, wenn die Sensoren das jeweilige Hindernis unter derselben Richtung bezogen auf die zellular strukturierte Umgebungskarte erfaßt haben. Insbesondere kann dadurch vermieden werden, daß durch Spiegelreflexionen von Ultraschallechos über eine Timeout-Bedingung für das Eintreffen von Schallechos am Sensor, vorhandene Hindernisse gelöscht werden, was dadurch geschehen kann, daß die Einheit beispielsweise an einer glatten Wand entlang fährt und nachfolgende Sensoren deren Meßrichtung schräg zur Wand verläuft keine Reflexionen von der Wand erhalten, sondern lediglich Spiegelreflexionen. Dies kann dazu führen, daß eine Timeout-Bedingung für das Eintreffen von Echos bewirkt, daß der Sensor denkt, der Bereich vor ihm sei frei weil die Wand wegen der langen Laufzeit der Echos von Spiegelreflexionen nicht registriert wird. Dadurch kann eine als "belegt" markierte Zelle, welche von einem Sensor belegt wurde, der senkrecht zur Wand mißt durch einen nachfolgenden Sensor, der schräg zur Wand mißt wieder als "frei" gekennzeichnet werden, da dieser aufgrund der Falschmessung deren Belegungsgrad reduziert.

Besonders vorteilhaft wird durch das erfindungsgemäße Verfahren sichergestellt, daß die Belegungsgrade von Zellen, welche sich innerhalb der Blindzone eines Ultraschallsensors befinden nicht verändert werden können. Damit wird die Kollisionsvermeidung bei der Bahnplanung von autonomen mobilen Einheiten im Nahbereich, insbesondere im Blindbereich der jeweiligen Sensoren erheblich verbessert. Andernfalls würden globale Inkrementierungs- und Dekrementierungsstrategien der Belegungsgradwerte dazu führen, daß ebenfalls die Belegungsgrade von Zellen verändert werden, welche sich im Blindbereich der Einheit befinden, welche jedoch nicht vermessen werden können.

Besonders vorteilhaft wird durch das erfindungsgemäße Verfahren eine maximale Sensorreichweite dadurch definiert, daß für Eintreffen der Ultraschallechos eine maximale Signallaufzeit vorgegeben wird, welche sich aus dem Zeitpunkt von der Abgabe des Meßimpulses bis zum Zeitpunkt des Eintreffens des Ultraschallechos ergibt. Aus dieser Signallaufzeit läßt sich über die Schallgeschwindigkeit ein Abstand bestimmen. Vorzugsweise werden Objekte in der Umgebung, welche außerhalb dieses maximalen Meßabstandes liegen nicht mehr in zugehörige Zellen der Umgebungskarte eingetragen, da dadurch zuverlässig falsche Meßergebnisse, welche von Mehrfachechos herrühren, oder welche von Meßimpulsen anderer Ultraschallsensoren abhängen, beim Aufbau der Karte vermieden werden können. Besonders vorteilhaft werden gemäß dem erfindungsgemäßen Verfahren Belegungsgrade von Sektoren der Zellen, welche sich innerhalb eines Bereiches zwischen dem gemessenen Objekt und der Blindzone befinden dekrementiert, da für diese Zellen bekannt ist, daß sich auf ihnen kein Hindernis befinden kann. Vorteilhaft sieht es das erfindungsgemäße Verfahren auch vor, lediglich jene Belegungsgrade von Zellen zu verändern, welche sich auf dem Meßstrahl befinden, da damit der Rechenaufwand für die Berechnung der Belegungsgradwerte einzelner Zellen erheblich reduziert werden kann und eine gute Näherung für die in der Praxis gefundenen Ergebnisse erreicht wird.

Besonders vorteilhaft wird der Belegungsgrad einer Zelle, welche sich auf dem Kreisbogensegment befindet, der durch den Öffnungswinkel des Meßkegels und durch die Entfernung des Hindernisses gegeben, ist positiv inkrementiert, da bekannt ist, daß sich auf einer dieser Zellen das Hindernis befinden muß.

Besonders vorteilhaft wird für die Belegungsgrade von Zellen ein maximaler Wert definiert, da damit der Rechenaufwand bei der Bestimmung der jeweiligen Belegungsgrade einer Zelle konstant gehalten werden kann und ein abschätzbarer Zeitaufwand für die Planung und Auswertung einer Umgebungskarte gewährleistet werden kann.

Besonders vorteilhaft kann das Inkrement in Abhängigkeit des Abstandes zum Hindernis in der Umgebung variiert werden, da damit in Abhängigkeit der Bewegungsgeschwindigkeit der Einheit und der Entfernung zur Einheit bestimmte Hindernisse höher oder geringer gewichtet werden können.

Vorteilhaft kann dabei das Inkrement auch von der Bewegungsgeschwindigkeit abhängig gemacht werden, um somit berücksichtigen zu können, daß bei schnellerer Fahrt die Einheit schneller mit einem Hindernis kollidieren würde.

Besonders vorteilhaft lokalisiert sich die autonome mobile Einheit anhand eines Koordinatenreferenzpunktes, welcher durch die exakte Position innerhalb einer Ursprungszelle der zellular strukturierten Umgebungskarte gegeben ist. Hierdurch wird erreicht, daß für den Koordinatenursprung nicht die Diskretisierung, welche durch die Zellengröße im Gitter vorgegeben ist, verwendet werden muß, sondern daß hierfür feiner aufgelöst werden kann. Dies spielt insbesondere dann eine Rolle, wenn in Abhängigkeit von gemessenen Abständen zu Hindernissen diejenige Zelle ermittelt werden soll, deren Belegungsgrad, bzw. deren Sektorbelegungsgrad erhöht werden soll.

Um den Rechenaufwand bei der Auswertung der Umgebungskarte zu optimieren und die Bahnplanung für eine autonome mobile Einheit zu beschleunigen ist es vorteilhaft vorgesehen, bei der Anwendung des erfindungsgemäßen Verfahrens unterschiedliche Zellgrößen für die zellular strukturierte Umgebungskarte zu verwenden, so können vorzugsweise von der Einheit weiter entfernte Zellen größer und der Einheit näher liegende Zellen kleiner gewählt werden.

Im folgenden wird die Erfindung anhand von Figuren weiter erläutert. In diesem Zusammenhang soll nochmals betont werden, daß die Grundlagen, welche für zellular strukturierte Umgebungskarten und Verfahren zur Orientierung in diesen Umgebungskarten im Stand der Technik [1, 2, 3] angegeben werden, für die weiteren Beschreibungsteile vorausgesetzt werden.

Figur 1    zeigt ein Beispiel einer zellular strukturierten Umgebungskarte aus dem Stand der Technik [1].

Figur 2    gibt ein Beispiel zur Bestimmung der Sensorausrichtung innerhalb der zellular strukturierten Umgebungskarte an.

Figur 3    gibt ein Beispiel für Sektoren von Meßrichtungsbereichen für die Vergabe von Belegungsgradwerten innerhalb einer Zelle der Umgebungskarte an.

Figur 4    veranschaulicht charakteristische Kenngrößen beim Messen mit einem Ultraschallsensor.

Figur 5    gibt ein Beispiel für einen durch das erfindungsgemäße Verfahren verbesserten Meßvorgang an.

Figur 6    gibt ein weiteres Beispiel für ein durch das erfindungsgemäße Verfahren verbesserten Meßvorgang an.

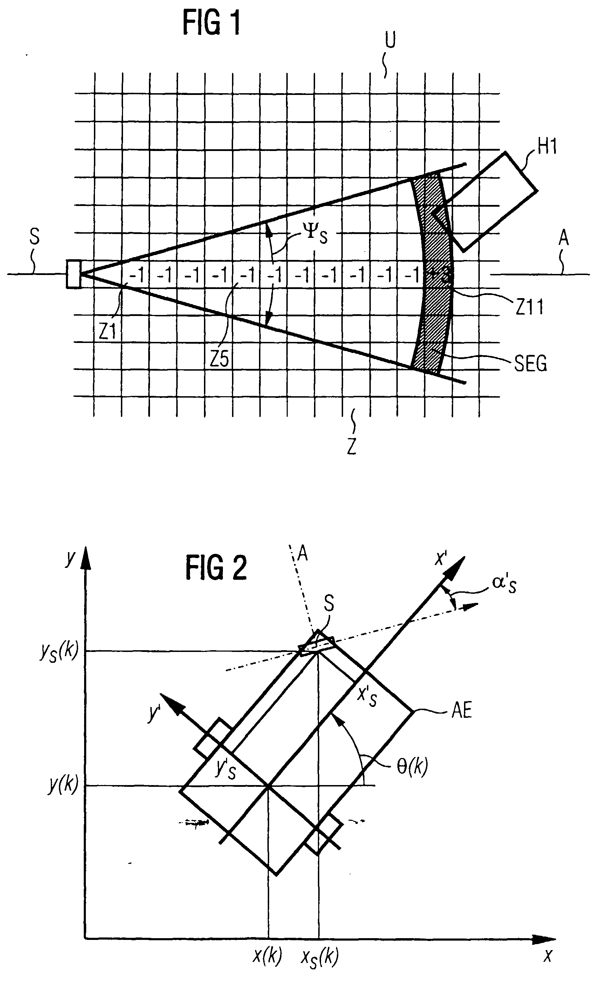

In Figur 1 ist ein Beispiel für das Basisverfahren zur Bildung von zellular strukturierten Umgebungskarten gemäß [1] angegeben. Ein Sensor S, welcher die Entfernung zu einem Hindernis H1 vermißt, soll Belegungsgrade für Zellen Z innerhalb einer Umgebungskarte U vergeben. Der Meßbereich des Ultraschallsensors ist durch den Öffnungswinkel $\Psi_s$ der Schallfront gegeben. Für innerhalb des Kegels detektierte Objekte kann nicht gesagt werden, welche Position diese in Relation zum Sensor einnehmen, sondern lediglich deren Entfernung kann bestimmt werden. Der Einfachheit halber werden alle Belegungsgrade jener Zellen verändert, welche sich auf der Symmetrieachse A des Meßkegels befinden. Entsprechend der Meßungenauigkeit des Sensors S ist lediglich bekannt, daß sich das Objekt H1 auf dem Segment SEG befinden muß. Da sich zwischen dem Objekt H1 und dem Sensor keine weiteren Hindernisse befinden können, werden die Belegungsgrade der entsprechenden Zellen Z1, Z5 usw. beispielsweise um ein negatives Inkrement verändert, währen der Belegungsgrad der Zelle Z11, welche sich auf dem Segment SEG befindet und auf der Achse A um +3 erhöht wird. Vorzugsweise kann ein maximaler Belegungsgrad von 15 vorgesehen sein und ein minimaler Belegungsgrad von 0. In Abhängigkeit dieser Belegungsgradwerte wird für die jeweilige Zelle die Wahrscheinlichkeit des Auftretens eines Hindernisses angegeben. Die Bahnplanung der autonomen mobilen Einheit kann vorzugsweise entsprechend den vergebenen Belegungsgradwerten durchgeführt werden. Trotz der Vereinfachung, daß lediglich die Belegungsgrade von Zellen auf der Achse A verändert werden, hat die Praxis gezeigt, daß hierdurch eine hinreichend präzise Karte aufgebaut wird, da während der Fahrt der autonomen mobilen Einheit viele Messungen von verschiedenen Positionen eingetragen werden. Da durch die Veränderung lediglich auf der Achse A liegender Zellen nicht sämtliche Belegungsgradwerte von ein Gitterzellen innerhalb des Schallkegels vom Ultraschallsensor verändert werden müssen, ist damit eine erhebliche Beschleunigung bei der Auswertung von Meßergebnissen und Eintragung dieser Meßergebnisse in die Umgebungskarte verbunden, was wiederum eine sehr hohe Meßrate erlaubt.

Dieses Verfahren hat jedoch den Nachteil, daß beim Stillstand der Einheit immer dieselben Zellen verändert werden, was dazu führen würde, daß der Inhalt der Zelle Z11 den maximalen Belegungsgrad erhält und die Belegungsgrade aller anderen Zellen zwischen dem Sensor und der Zelle Z11 auf der Achse A gelöscht würden. Des weiteren hat dieses Verfahren den Nachteil, daß die Belegungsgrade von Zellen, welchen nicht durch die Strahlachse A geschnitten werden nicht mehr reduziert werden können und damit die Weiterfahrt einer autonomen mobilen Einheit in unzulässiger Weise blockieren. Ein weiterer Nachteil dieses Verfahrens besteht darin, daß sogenannte Timeout-Messungen nicht zur Auswertung und zur Aktualisierung der Belegungsgrade verwendet werden. Timeout-Distanzen ergeben sich daraus, daß nach dem Senden eines Meßimpulses der Sensor beispielsweise nur eine bestimmte maximale Zeit bis zum Eintreffen eines Echos wartet. Die Distanz, welche der Schall in diese Zeit zurücklegen kann wird als die Timeout-Entfernung bezeichnet. Wird während der Wartezeit kein Echo empfangen, so wird als Meßergebnis beispielsweise die Timout-Distanz zurückgeliefert. Vorzugsweise werden durch das erfindungsgemäße Verfahren alle Belegungsgrade, der Sektoren von Zellen auf der Achse A innerhalb der Timout-Distanz reduziert.

Figur 2 gibt ein Beispiel zur Bestimmung der exakten Sensorausrichtung an einer autonomen mobilen Einheit AE an, welche auf ein der zellular strukturierten Umgebungskarte zugrundeliegendes Koordinatensystem bezogen wird.

Zur Erfassung der Umwelt ist die Einheit AE vorzugsweise mit 24 handelsüblichen Ultraschallsensoren ausgestattet. Der Experimentierroboter war beispielsweise mit ns (= 24) Ultraschallsensoren versehen. Die Position und Orientierung eines Sensors S im eigenen Koordinatensystem K' der Einheit ist gegeben durch

$$a'_s = (x'_s, y'_s, \alpha'_s) \tag{0.1}$$

Die genauen Sensorpositionen können beispielsweise vorgegeben sein. Bei einer globalen Konfiguration der Einheit $\vec{x}_R(k) = (x(k), y(k), \alpha(k))$ zum Zeitpunkt k läßt sich die globale Sensorposition $a_s(k)$

$$a_s(k) = (x_s(k), y_s(k), \alpha_s(k)) \tag{0.2}$$

eines Sensors s durch eine Koordinatentransformation bestimmen

$$
\begin{aligned}
x_s(k) &= x(k) + x'_s \cos(\theta(k)) - y'_s \sin(\theta(k)) \\
y_s(k) &= y(k) + x'_s \sin(\theta(k)) + y'_s \cos(\theta(k)) \\
\alpha_s(k) &= \theta(k) + \alpha'_s
\end{aligned}
\tag{0.3}
$$

Definition der Sensorpositionen dabei global: $a_s(k)$, und lokal: $a'_s$

Da die globale Sensorposition $a_s(k)$ offensichtlich von der globalen Konfiguration der Einheit und damit von der Zeit abhängig ist, wird im folgenden aus Übersichtlichkeitsgründen meist der Zeitindex k weggelassen werden.

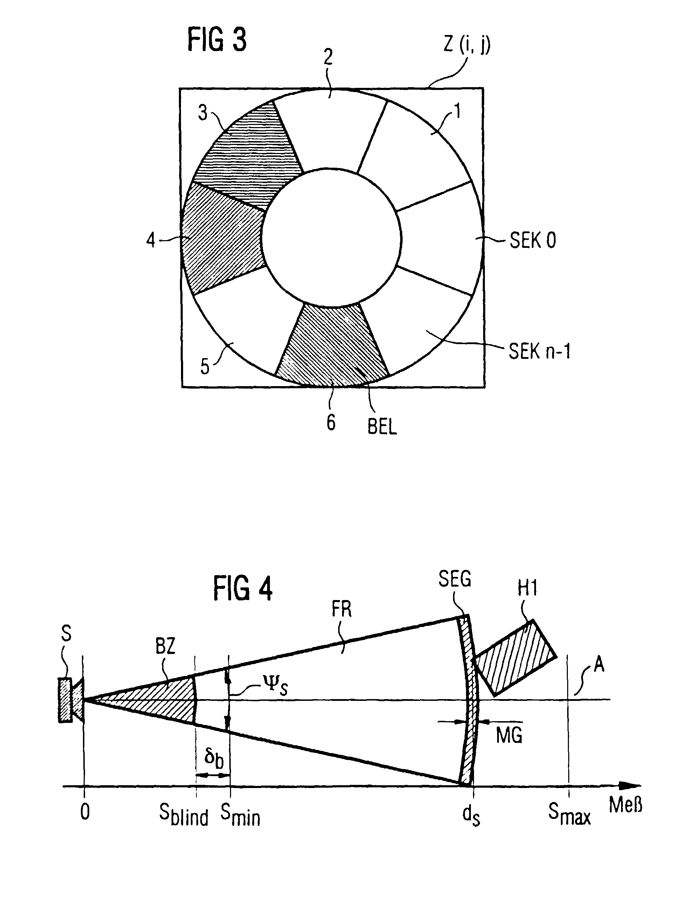

Figur 3 zeigt als Beispiel eine Zelle Z, welche mit Sektoren für die Vergabe von richtungsabhängig bestimmten Belegungsgradwerten BEL in Sektoren SEK aufgeteilt ist. Die Höhe der vergebenen Belegungsgrade ist hier durch die Graufärbung der entsprechenden Sektoren 1 bis 6 angedeutet. Gemäß dem erfindungsgemäßen Verfahren werden für alle Zellen der zellular strukturierten Umgebungskarte solche Bereiche in Form von Sektoren vorgesehen. Diese Vorgehensweise spielt insbesondere dann eine Rolle, wenn mehrere Sensoren an der autonomen mobilen Einheit vorgesehen sind und diese zu unterschiedlichen Zeiten Belegungsgradwerte für Zellen der Umgebungskarte vergeben. In Figur 3 sind acht solche Bereiche also Sektoren für die Vergabe von Belegungsgradwerten angedeutet, es ist jedoch eine beliebige Anzahl solcher Bereiche größer oder gleich 2 denkbar. Die zu wählende Anzahl von Sektoren richtet sich bevorzugt nach dem gewünschten Auflösungsvermögen für die zellular strukturierte Umgebungskarte und nach den zur Verfügung stehenden Mitteln für die Auswertung und für die Bahnplanung der autonomen mobilen Einheit. Durch das erfindungsgemäße Verfahren wird vorteilhaft sichergestellt, daß mit Hilfe dieser richtungsabhängigen Sektoren für Belegungsgradwerte in zeitlicher Abfolge Belegungsgradwerte von einzelnen Zellen, welche durch unterschiedliche Sensoren verändert werden, lediglich in der Form verändert werden können, daß alle Sensoren bezüglich ihrer Meßrichtung in der zellular strukturierten Umgebungskarte und der Veränderung der Belegungsgradwerte für die jeweiligen Sektoren gleichgeschaltet werden. So kann beispielsweise verhindert werden, daß eine Timeout-Messung, welche dadurch entsteht, daß ein Sensor ein Hindernis schräg vermißt wobei der Schall komplett daran reflektiert wird, was dazu führt, daß ein Echo eventuell verspätet beim Sensor eintrifft, nicht den selben Sektor betrifft, wie denjenigen, welcher für die Vergabe des Belegungsgrades derselben Zelle, durch einen anderen Sensor verändert wurde. Auf diese Weise wird vermieden, daß Hindernisse, welche vorhanden sind, und welche durch einen Sensor zuverlässig detektiert wurden durch die Falschmessung eines anderen Sensors wieder aus der Karte ausgetragen werden können. Weiterhin wird ebenfalls erreicht, daß dynamische Hindernisse, welche sich durch den Meßkegel eines Sensors hindurch bewegen, schneller wieder aus der zellular strukturierten Karte ausgetragen werden können, denn falls derselbe Sensor bei seiner nächsten Messung, in diesem Sektor kein Hindernis mehr antrifft, wird der Belegungsgrad vorzugsweise sofort wieder reduziert.

Für jede Gitterzelle Z(i, j) existiert efindungsgemäß ein polares Histogramm für die Hindernisrepräsentation. Dieses hat eine beliebige Winkelauflösung $\psi_o$, so daß sich für die Anzahl der Sektoren eine ganze Zahl $n=360/\psi_o$ ergibt. In den Experimenten wurde beispielsweise $\psi_o =22,5$ ($n=16$) gewählt. Jeder Sektor $\kappa$ korrespondiert dabei mit einem diskreten Winkel $\delta$

$$\delta = \kappa\psi_o, \qquad \kappa \in \{0,1,...,n\text{-}1\} \tag{0.4}$$

der ein Vielfaches von $\psi$ ist.

Der Sektor $\kappa$ errechnet sich aus dem Winkel $\beta_s$, unter dem die entsprechende Gitterzelle Z(i, j) vom Sensor s gesehen wurde, mit

$$\kappa = floor\left(\beta_s/\psi_o\right). \tag{0.5}$$

Für jede Gitterzelle Z(i, j) existiert pro Sektor $\kappa$ ein Belegungsgrad BEL

$$BEL_\kappa(i,j) \in \{0,...,BEL_{max}\} \tag{0.6}$$

mit beispielsweise $BEL_{max} =15$.

Die gesamte Belegungsgrad GBEL einer Gitterzelle errechnet sich bevorzugt aus der Summe aller Belegungsgrade BEL. Übersteigt die Summe den maximalen Wert $BEL_{max}$, so wird die Summe vorzugsweise auf $BEL_{max}$ begrenzt.

$$BEL(i, j) = \min\left(\sum_{k=0}^{n} BEL_k(i, j), BEL_{max}\right) \tag{0.7}$$

Figur zeigt als Beispiel eine einzelne Gitterzelle einer Umgebungskarte mit beispielsweise 8 Sektoren. Die Sektoren 3, 4 und 6 weisen dabei einen Belegungsgrad ungleich Null auf. Die unterschiedlichen Grautöne deuten dabei die Stärke des jeweiligen Belegungsgrades an. Pro Gitterzelle wird vorzugsweise einmal die gesamte Sektorinformation gespeichert.

Figur 4 zeigt ein Beispiel eines Sensors, welcher ein Hindernis H1 in der Umgebung vermißt. Dargestellt ist der Sensor S das Hindernis H1 die Meßungenauigkeit MG die Symmetrieachse des Ausbreitungskegels A der Öffnungswinkel des Schallkegels $\Psi_S$ und eine Blindzone BZ des Sensors. Weiterhin ist ein Freiraum FR zwischen der Blindzone und dem Hindernis H1 gezeigt. Vorzugsweise werden durch das erfindungsgemäße Verfahren Zellen der Umgebungskarte, welche sich innerhalb der Blindzone BZ befinden nicht in ihren Belegungsgraden verändert.

Die minimale physikalische Meßdistanz $S_{blind}$ wird hauptsächlich von der Sendeleistung des Sensors bestimmt. Befindet sich ein Objekt innerhalb der Blindzone und innerhalb der Schallkeule des Ultraschallsensors, wird der Schall mehrfach zwischen dem Sensor und dem Objekt hin und her reflektiert, ehe der Sensor nach dem Abklingen der Membran meßbereit ist. Als Meßergebnis erhält man einen Wert in der Gegend von $S_{blind}$, wobei der zurückgelieferte Meßwert auch leicht um einige Zentimeter darüber liegen kann. Daher wird die minimale Meßdistanz $S_{min}$

$$S_{min}=S_{blind}+\delta_b \tag{0.8}$$

definiert, ab welcher ein Ultraschallsensor sicher genaue Entfernungswerte liefern kann. Mit einer Blindzonenerweiterung $\delta_b$ von 3 cm betrug die minimale Meßdistanz in Versuchen 12 cm. Als Ergebnis kann festgehalten werden, daß bei Meßwerten kleiner $S_{min}$ keine genaue Aussage über die Entfernung eines Objekts innerhalb der Blindzone gemacht werden kann. Ein Objekt kann sich eventuell schon sehr nahe am Sensor befinden oder auch an der Grenze der Blindzone.

Beim verwendeten Ultraschallsystem kann die maximale Meßdistanz $S_{max}$ ("Timeout-Distance") softwaremäßig - innerhalb festgelegter Grenzen eingestellt werden. Ein Sensor wartet also beispielsweise maximal die Zeit $T_{us}$, ehe die maximale Entfernung $S_{max}$ als Meßergebnis zurückgegeben wird. Wenn kein Ultraschallecho empfangen wurde, deuten Timeout-Messungen in Innenräumen generell auf Spiegelreflexionen hin, bei denen der ausgesandte Schall nicht mehr zum Sensor zurückgekommen ist. Demgemäß werden solche Messungen bevorzugt als Reflexionen bewertet. Befindet sich ein Meßwert zwischen $S_{min}$ und $S_{max}$, können bevorzugt zwei Informationen aus dieser einen Messung gewonnen werden. Erstens, im Bereich des Schallkegels, in einer Entfernung $d_s$ vom Sensor entfernt, liegt irgendwo das reflektierende Meßobjekt. Zweitens, im Schallkegelbereich zwischen $S_{min}$ und $d_s$ befindet sich kein für Ultraschall sichtbares Objekt, da sonst dessen Entfernung gemessen worden wäre.

Bei der Auswertung der Frei-Information gibt es mindestens zwei Interpretationsmöglichkeiten. Zum einen kann es sich um eine Spiegelreflexion handeln, bei der das ausgesandte Ultraschallsignal nicht mehr zum Sensor zurückkommt. Zum anderen kann sich tatsächlich Freiraum vor dem Sensor befinden, so daß kein Echo empfangen werden.kann.

Eine dritte Möglichkeit besteht darin, daß ein weiches Objekt, wie z.B. ein Polster, den Ultraschall komplett absorbiert. Diese kann aber alleine mit Ultraschallsensoren nicht erkannt werden. Der Fall der Komplettabsorption kommt aber praktisch nie vor. Nimmt man grundsätzlich Spiegelreflexion bei einer Timeout-Messung an, wird man die Messung einfach ignorieren und die Hindernisbelegung der Zellen innerhalb der Schallkeule nicht löschen oder erniedrigen, da ja wertvolle Belegt-Informationen gelöscht werden könnten. Bei einer wirklichen Spiegelreflexion, bei er sich ein Hindernis in der Nähe des Sensors befindet, ist diese Vorgehensweise durchaus richtig. Befindet sich aber wirklicher Freiraum vor dem Sensor, wird die durch die Sensormessung gewonnene Frei-Information nicht ausgewertet. Das Ignorieren der Frei-Information kann große Probleme bereiten, wenn Gitterzellen zuvor fehlerhaft mit Hindernissen belegt worden sind. Fehlbelegungen von Gitterzellen erfolgen z.B. ständig durch die durch die breite Schallkeule bedingte Richtungsunsicherheit einer Messung. Gravierende Fehlbelegungen können auch durch dynamische Hindernisse verursacht werden. Befindet sich ein dynamisches Hindernis sichtbar im Meßbereich eines Sensors, so wird gemäß des Sensormodells der Belegt-Zustand der auf der Schallachse in der Meßdistanz $d_s$ liegenden Gitterzelle richtigerweise erhöht.

Der Belegungszustand ist aber nur für den kurzen Zeitraum richtig, solange sich das Hindernis in der Nähe dieser Gitterzelle befindet. Bewegt sich dieses Hindernis weiter, bleiben - nun fälschlicherweise - belegte Hinderniszellen in der Karte zurück, welche die Weiterfahrt des Roboters verhindern können. Wenn sich ein weiteres sichtbares Hindernis hinter den falsch belegten Zellen befindet, ist dies kein Problem, da sie durch Hindernismessungen sehr schnell gelöscht werden würden. Befindet sich aber Freiraum hinter diesen Zellen, wie z.B. ein Korridor, so werden nur Timeout-Messungen erfolgen, welche durch Nichtauswertung der Frei-Information die fehlerhaft belegten Zellen nicht löschen werden. Die belegten Zellen werden die Weiterfahrt sicher blockieren.

Bevorzugt werden Ultraschallentfernungsmessungen in der zellular strukturierten Umgebungskarte wie folgt eingetragen. Im wesentlichen findet dabei die Grundidee von Borenstein [1] Anwendung. Ein hoher Belegungsgrad einer Zelle bedeutet hierin, daß sich mit hoher Plausibilität ein Hindernis in der korrespondierenden Zelle der Umgebungskarte befindet. Pro Sensormessung wird vorzugsweise nur der Zelleninhalt einer einzigen Zelle inkrementiert. Bei Ultraschallmessungen ist das bevorzugt diejenige Zelle, welche sich auf dem Strahl A befindet und auf der die Sensormessung zu liegen kommt. Bevorzugt werden alle weiteren Zellinhalte entlang der Strahlachse im Freiraum FR dekrementiert. Dieses einfache Verfahren benötigt nur sehr wenig Rechenzeit und kann daher während der Fahrt angewendet werden. Eine Bewegung des Roboters als autonome mobile Einheit wirkt sich vielmehr positiv auf den Kartenaufbau aus. Durch den Eintrag verschiedener Messungen aus unterschiedlichen Positionen, wird die Orientierungsunsicherheit einer Messung bedingt durch den Öffnungswinkel des Schallkegels gut ausgeglichen. Gemäß dem erfindungsgemäßen Verfahren wird jedoch der Eintrag einer Ultraschallmessung in die zellular strukturierte Umgebungskarte bevorzugt anhand von zwei Zellen vorgenommen. Die eine ist die Startzelle und die andere ist die Endzelle. Die Startzelle ist dabei diese Zelle, welche von der Meßachse A außerhalb des Blindbereiches als erste geschnitten wird und die Endzelle ist jene Zelle, auf welcher sich das Objekt befindet. D. h. die Zelle, welche sich im Hindernisabstand im der Entfernung vom Sensor auf der Achse A befindet. Weitere Details hierzu können [2] entnommen werden. Die Zellen, welche zwischen der Start- und der Endzelle im Freiraum FR liegen werden bevorzugt dekrementiert. Das Dekrementieren beginnt bevorzugt außerhalb der Blindzone, da sich nach vielen Test mit Objekten innerhalb der Blindzone herausgestellt hat, daß vom Sensorsystem Meßdistanzen nicht nur in der Nähe der Blindzone, sondern manchmal auch zwischen $S_{min}$ und $S_{max}$ zurückgeliefert wurden. Es kann also auch vorkommen, daß sich bei einem Meßergebnis zwischen $S_{min}$ und $S_{max}$ das Meßobjekt innerhalb der Blindzone befindet. Werden jedoch Zellinhalte.innerhalb der Blindzone nie gelöscht, so führt es zu einem wesentlich besseren Kollisionsvermeidungsverhalten in sehr engen Einsatzumgebungen.

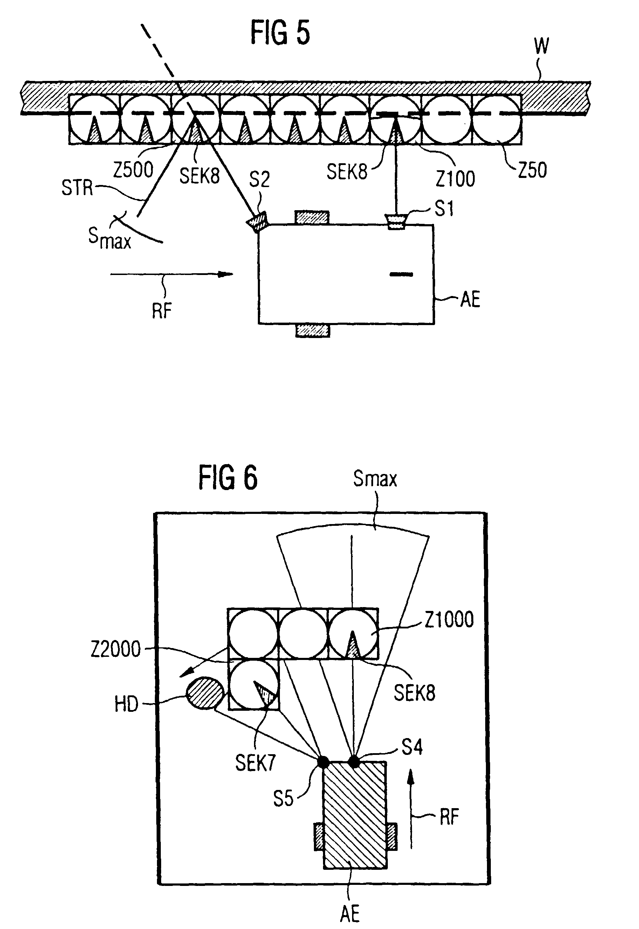

Figur 5 zeigt einen Meßvorgang, welcher durch das erfindungsgemäße Verfahren verbessert wird. Die autonome mobile Einheit AE bewegt sich entlang einer Fahrtrichtung RF in einem Korridor, welcher hier durch eine Wand W dargestellt ist. Diese sehr glatte Wand reflektiert Ultraschall sehr gut. Aus der Umgebungskarte der Einheit sind hier Zellen Z50, Z60, Z100 und Z500 dargestellt. Beim Bewegungsvorgang entlang der Fahrtrichtung RF wird von der Einheit und deren Sensoren S1 und S2 die Wand vermessen und es werden gemäß dem erfindungsgemäßen Verfahren Sektoren mit Belegungsgradwerten versehen. Da der Sensor S1 senkrecht zur Wand steht, wird das Ultraschallsignal sehr gut reflektiert und von ihm auch wieder empfangen. Im.Bereich der Zelle Z100 ist diesem Sensor S1 in Figur 5 durch die entsprechende Meßrichtung der Sektor SEK8 zugeordnet, welcher in diesem Fall der senkrechten Meßrichtung entspricht. D. h. wenn vom Sensor unter dieser Meßrichtung Hindernisse detektiert werden, so werden sie in diesem Sektor SEK8 eingetragen. Falls die Wand W sehr lang ist, so wird während der Fahrt der Sektor SEK8 ständig mit einem inkrementierten Belegungsgrad versehen. Dies ergibt sich daraus, daß der Sensor S1 ständig die Wand vermißt und mit jedem Echo bevorzugt den Belegungsgrad von SEK8 erhöht. Im Fortlauf der Bewegung, wird jedoch derselbe Sektor bzw. dieselbe Zelle Z100 ebenfalls durch den Sensor S2 der autonomen mobilen Einheit AE vermessen, welcher schräg zur Wand mißt. Dieser Sachverhalt ist anhand der Zelle Z500 dargestellt. Es ist deutlich zu erkennen, daß die Achse bzw. der Strahlverlauf STR, der Wellenfront vom Sensor glatt von der Wand reflektiert wird, was zu einer Timeout-Messung bei einer Entfernung $S_{max}$ führt. Gemäß dem erfindungsgemäßen Verfahren führt jedoch diese Timeout-Messung nicht dazu, daß der Belegungsgrad des Sektors SEK8 verändert wird, da diese Messung unter einem anderen Winkel erfolgt, welcher beispielsweise dem Sektor SEK7 zugeordnet ist. Auf diese Weise wird durch das erfindungsgemäße Verfahren vermieden, daß fälschlicherweise durch Fehlmessungen richtige Meßergebnisse aus mit Belegungsgradwerten versehenen Zellen der Umgebungskarte wieder gelöscht werden.

Figur 6 zeigt einen Anwendungsfall, bei welchem das erfindungsgemäße Verfahren zu weiteren Vorteilen bei der Auswertung führt. Beispielsweise hat sich in diesem Fall, ein Hindernis HD von links nach rechts durch den Beobachtungsraum des Sensors S4 bewegt. Dies führte dazu, daß vom Sensor S4 der autonomen mobilen Einheit, welche entlang der Richtung RF fährt in der Zelle Z1000 der Sektor SEK8 mit einem Belegungsgrad belegt wurde, welcher durch eine Entfernungsmessung bei der Vorbeibewegung des Hindernisses HD entstand. Bei einer weiteren darauf folgenden Messung durch den Sensor S4 kann dieses Hindernis mit Hilfe einer Timeout-Messung $S_{max}$ wieder aus der Karte entfernt werden, indem der Belegungsgrad im Sektor SEK8 der Zelle Z1000 dekrementiert wird. Das schnell vorbeibewegende Hindernis HD erzeugt anschließend durch eine Entfernungsmessung vom Sensor S5 einen erhöhten Belegungsgrad im Sektor SEK7 der Zelle Z2000.

Literatur

[1] US 5 006 983
Obstacle-Avoiding Navigation System, J. Borenstein et al.
[2] DE 44 08 329 C2 Patent
"Verfahren zum Aufbau einer zellular strukturierten Um gebungskarte von einer selbstbeweglichen mobilen Einheit, welche sich mit Hilfe von auf Wellenreflexionen basierenden Sensoren orientiert, R. Bauer
[3] Offenlegungsschrift
DE 44 08 328 A1
"Verfahren zum Aufbau einer zellular strukturierten Um gebungskarte von einer selbstbeweglichen mobilen Einheit, welche sich mit Hilfe von auf Wellenreflexionen basierenden Sensoren orientiert, R. Bauer

**Patentansprüche**

1. Verfahren zur Erstellung einer zellular strukturierten Umgebungskarte von einer selbstbeweglichen mobilen Einheit, welche sich mit Hilfe von auf Wellenreflexion basierenden Sensoren in der Umgebung orientiert,

   a) bei dem von mindestens einem Sensor (S)der Abstand des Sensors zu einem Umgebungsgegenstand (H1) und dessen Lage als unbestimmter Ort auf einem Kreisbogensegment (SEG) mit dem Sensor als Kreismittelpunkt und dem Abstand als Radius mehrmals ermittelt wird, wobei das Kreisbogensegment (SEG) durch den Meßbereich des Sensors begrenzt wird,
   b) bei dem für eine Messung die Ausrichtung des Sensors $(x'_s, y'_s, \Theta(k))$ bezüglich der zellular strukturierten Umgebungskarte in Form eines Meßstrahles (A) bestimmt wird,
   c) bei dem eine Zelle (Z) der Umgebungskarte (U) in mindestens zwei Sensorausrichtungbereiche (SEK) als Sektoren unterteilt ist, und der Belegungsgrad (BEL) eines Sektors (SEK) der Zelle (Z) in Abhängigkeit der Ausrichtung des Sensors (S) festgelegt wird,
   d) und bei dem ein Gesamtbelegungsgrad (GBEL) der Zelle (Z) aus den Belegungsgraden (BEL) der Sektoren (SEK) der Zelle (Z) bestimmt wird.

**2.** Verfahren nach Anspruch 1,

a) bei dem in Meßrichtung mindestens eines Sensors (S) eine Blindzone (BZ) in Abhängigkeit einer Meßungenauigkeit des Sensors vorgegeben wird, welche an den Sensor angrenzt,
b) und bei dem der Belegungsgrad des Sektors einer Zelle (Z) der Umgebungskarte, welche sich innerhalb der Blindzone befindet nicht verändert wird.

**3.** Verfahren nach einem der voranstehenden Ansprüche,

a) bei dem mindestens eine maximale Sensorreichweite in Abhängigkeit eines Laufzeitkriteriums ($S_{max}$) für die maximale Laufzeit zwischen abgestrahltem Meßimpuls und empfangenem Signalecho vorgegeben wird,
b) und bei dem der Belegungsgrad des Sektors (SEK) einer Zelle der Umgebungskarte, welche sich außerhalb der Sensorreichweite befindet nicht verändert wird.

**4.** Verfahren nach einem der voranstehenden Ansprüche, bei dem in Abhängigkeit des Meßintevalles der Belegungsgrad jeweils eines Sektors mindestens einer Zelle (Z1, Z5), welche sich auf dem Meßstrahl befindet, der als Symmetrieachse der kegelförmigen Wellenfront von dem Sensor zu dem Umgebungsgegenstand (H1) geht, negativ inkrementiert wird.

**5.** Verfahren nach einem der voranstehenden Ansprüche, bei dem der Belegungsgrad (Z11) des Sektors einer Zelle welche sich auf dem Kreisbogensegment (SEG) befindet positiv inkrementiert wird.

**6.** Verfahren nach einem der voranstehenden Ansprüche, bei dem je Zelle ein maximaler Bewegungsgrad vorgegeben wird, welcher bei einer additiven Verknüpfung sämtlicher je Zelle für Sektoren gespeicherter Belegungsgrade nicht überschritten werden darf.

**7.** Verfahren nach einem der voranstehenden Ansprüche, bei dem das Inkrement, mit welchem der Belegungsgrad inkrementiert wird vom Abstand des Umgebungsgegenstandes abhängt.

**8.** Verfahren nach Anspruch 7, bei dem das Inkrement für einen relativ kleinen Abstand größer gewählt wird als für einen größeren Abstand.

**9.** Verfahren nach einem der voranstehenden Ansprüche, bei dem Das Inkrement von einer Fortbewegungsgeschwindigkeit der selbstbeweglichen mobilen Einheit abhängt.

**10.** Verfahren nach Anspruch 9, bei dem das Inkrement für eine relativ hohe Fortbewegungsgeschwindigkeit größer gewählt wird als für eine niedrigere Fortbewegungsgeschwindigkeit.

**11.** Verfahren nach einem der vorangehenden Ansprüche,

a) bei dem als Eigenposition der selbstbeweglichen mobilen Einheit zum Zeitpunkt einer Messung die exakte Position eines Koordinatenreferenzpunktes ($x_k$, $y_k$) eines der zellular strukturierten Umgebungskarte zugrunde liegenden Koordinatensystems innerhalb einer Ursprungszelle der Umgebungskarte (U) verwendet wird,
b) und bei dem für eine jeweilige Messung die genaue Ausrichtung und Position des Sensors bezüglich des Koordinatensystems mittels der Eigenposition der Einheit und dem Ort der Anbringung, sowie der Lage des Sensors an der Einheit ($x'_s, y'_s, \Theta(k), \alpha'_s$), bestimmt wird.

**12.** Verfahren nach einem der vorangehenden Ansprüche, bei dem zur Erstellung der Umgebungskarte verschieden große Zellen verwendet werden.

**Claims**

**1.** Process for producing a map of the surroundings, with a cellular structure, of an automatically moving mobile unit which orients itself in the surroundings using sensors based on wave reflection,

a) in which at least one sensor (S) repeatedly determines the distance between the sensor and an object (H1) in the surroundings and the position of said object (H1) as an indeterminate location on a circular arc segment (SEG) with the sector as the centre of the circle and the distance as a radius, the circular arc segment (SEG) being delimited by the measurement range of the sensor,

b) in which, for a measurement, the orientation of the sensor $(x'_s, y'_s, \Theta(k))$ in relation to the map of the surroundings with a cellular structure is determined in the form of a measurement beam (A),

c) in which a cell (Z) of the map (U) of the surroundings is divided into at least two sensor orientation areas (SEK) as sectors, and the occupancy rate (BEL) of a sector (SEK) of the cell (Z) is defined as a function of the orientation of the sensor (S),

d) and in which an overall occupancy rate (GBEL) of the cell (Z) is determined from the occupancy rates (BEL) of the sectors (SEK) of the cell (Z).

2. Process according to Claim 1,

a) in which a blind zone (BZ) is predefined in the measuring direction of at least one sensor (S) as a function of a measurement imprecision of the sensor, said zone adjoining the sensor,

b) and in which the occupancy rate of the sector of a cell (Z) of the map of the surroundings which is located within the blind zone is not changed.

3. Process according to one of the preceding claims,

a) in which at least one maximum sensor range is predefined as a function of a propagation time criterion $(S_{max})$ for the maximum propagation time between the measurement pulse which is emitted and the signal echo which is received,

b) and in which the occupancy rate of the sector (SEK) of a cell of the map of the surroundings which is located outside the range of the sensor is not changed.

4. Process according to one of the preceding claims, in which, as a function of the measurement interval, the occupancy rate of, in each case, one sector of at least one cell (Z1, Z5) which is located on the measurement beam which runs, as an axis of symmetry of the conical wave front, from the sensor to the object (H1) in the surroundings, is incremented negatively.

5. Process according to one of the preceding claims, in which the occupancy rate (Z11) of the sector of a cell which is located on the circular arc segment (SEG) is incremented positively.

6. Process according to one of the preceding claims, in which a maximum occupancy rate per cell is predefined, which rate must not be exceeded when there is an additive logic operation performed on all the occupancy rates stored per cell for sectors.

7. Process according to one of the preceding claims, in which the increment with which the occupancy rate is incremented depends on the distance from the object in the surroundings.

8. Process according to Claim 7, in which the increment selected for a relatively small distance is greater than that for a relatively large distance.

9. Process according to one of the preceding claims, in which the increment depends on a locomotion speed of the automatically moving mobile unit.

10. Process according to Claim 9, in which the increment selected for a relatively high locomotion speed is greater than for a relatively low locomotion speed.

11. Process according to one of the preceding claims,

a) in which the precise position of a coordinate reference point $(x_k, y_k)$ of a coordinate system, on which the map of the surroundings with a cellular structure is based, within an origin cell of the map (U) of the surroundings is used as the automatically moving mobile unit's own position at the time of a measurement,

b) and in which, for a respective measurement, the precise orientation and position of the sensor in relation to the coordinate system is determined by means of the unit's own position and the location of the attachment and the position of the sensor on the unit ($x'_s$, $y'_s$, $\Theta(k)$, $\alpha'_s$).

**12.** Process according to one of the preceding claims, in which cells of different sizes are used to produce the map of the surroundings.

**Revendications**

**1.** Procédé pour l'établissement d'une carte environnementale à structure cellulaire par une unité autonome à déplacement autonome qui s'oriente dans l'environnement à l'aide de capteurs basés sur la réflexion d'ondes,

a) dans lequel la distance du capteur par rapport à un objet (H1) environnant et sa position en un lieu indéfini d'un segment d'arc de cercle (SEG) est calculée plusieurs fois par au moins un capteur (S) avec le capteur comme centre du cercle et la distance comme rayon, le segment d'arc de cercle (SEG) étant limité par le domaine de mesure du capteur,
b) dans lequel, pour une mesure, l'orientation du capteur ($x'_s$,$y'_s$,$\Theta(k)$) par rapport à la carte environnementale à structure cellulaire est déterminée sous la forme d'un rayon de mesure (A),
c) dans lequel une cellule (Z) de la carte environnementale (U) est divisée en au moins deux zones d'orientation des capteurs (SEK) sous la forme de secteurs, et le degré d'occupation (BEL) d'un secteur (SEK) de la cellule (Z) est défini en fonction de l'orientation du capteur (S),
d) et dans lequel un degré d'occupation global (GBEL) de la cellule (Z) est déterminé à partir du degré d'occupation BEL des secteurs SEK de la cellule (Z).

**2.** Procédé selon la revendication 1,

a) dans lequel, dans la direction de mesure d'au moins un capteur (S), une zone aveugle (BZ) est prédéterminée en fonction d'une imprécision de mesure du capteur, laquelle zone aveugle est adjacente au capteur,
b) et dans lequel le degré d'occupation du secteur d'une cellule (Z) de la carte environnementale qui se trouve à l'intérieur de la zone aveugle n'est pas modifié.

**3.** Procédé selon l'une des revendications précédentes,

a) dans lequel au moins une portée maximale de capteur est prédéterminée en fonction d'un critère de durée de déplacement ($S_{max}$) pour la durée de déplacement maximale entre l'impulsion rayonnée et l'écho du signal reçu,
b) et dans lequel le degré d'occupation du secteur (SEK) d'une cellule de la carte environnementale qui se trouve à l'extérieur de la portée du capteur n'est pas modifié.

**4.** Procédé selon l'une des revendications précédentes, dans lequel, en fonction de l'intervalle de mesure, le degré d'occupation à chaque fois d'un secteur d'au moins une cellule (Z1, Z5) qui se trouve sur le rayon de mesure qui sert d'axe de symétrie du front d'onde de forme conique entre le capteur et l'objet environnant (H1) est incrémenté négativement.

**5.** Procédé selon l'une des revendications précédentes, dans lequel le degré d'occupation (Z11) du secteur d'une cellule qui se trouve sur le segment d'arc de cercle (SEG) est incrémenté positivement.

**6.** Procédé selon l'une des revendications précédentes, dans lequel, par cellule, un degré maximum d'occupation est prédéterminé, qui ne peut être dépassé lors d'une conjugaison additive de tous les degrés d'occupation enregistrés par cellule pour des secteurs.

**7.** Procédé selon l'une des revendications précédentes, dans lequel l'incrément par lequel le degré d'occupation est incrémenté dépend de la distance par rapport à l'objet environnant.

**8.** Procédé selon la revendication 7, dans lequel l'incrément pour une distance relativement petite est choisie plus grand que pour une distance plus grande.

**9.** Procédé selon l'une des revendications précédentes, dans lequel l'incrément dépend d'une vitesse de déplacement de l'unité mobile à déplacement autonome.

**10.** Procédé selon la revendication 9, dans lequel l'incrément est sélectionné plus grand pour une vitesse d'avancement relativement élevée que pour une vitesse d'avancement plus faible.

**11.** Procédé selon l'une des revendications précédentes,

a) dans lequel on utilise comme position propre de l'unité mobile se déplaçant de manière autonome, au moment d'une mesure, la position exacte d'un point de référence de coordonnées $(x_k, y_k)$ du système de coordonnées à la base de la carte environnementale à structure cellulaire, à l'intérieur d'une cellule d'origine de la carte environnementale (U),

b) et dans lequel, pour une mesure respective, on détermine l'orientation et la position précises du capteur par rapport au système de coordonnées au moyen de la position propre de l'unité et de l'emplacement d'installation ainsi que de la position du capteur sur l'unité $(x'_s, y'_s, \Theta(k), \alpha'_s)$.

**12.** Procédé selon l'une des revendications précédentes, dans lequel pour l'établissement de la carte environnementale, on utilise des cellules de différentes tailles.

# FIG 1

# FIG 2

## FIG 3

Z (i, j)

2

3

1

4

SEK 0

5

SEK n-1

6    BEL

## FIG 4

SEG    H1

FR

S

BZ

$\Psi_S$

A

$\delta_b$

MG

0    $S_{blind}$ $S_{min}$    $d_S$    $S_{max}$    Meß

FIG 5

FIG 6